# EUROPEAN PATENT APPLICATION

(11) **EP 2 865 856 A1**
(43) Date of publication of application: **29.04.2015**
(21) Application number: 12879179.5
(22) Date of filing: 20.06.2012
(51) Int. Cl.: F01N 3/08

(54) **EXHAUST PURIFICATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: TAKADA, Keishi, Toyota-shi Aichi 471-8571 (JP); TOSHIOKA, Shunsuke, Toyota-shi Aichi 471-8571 (JP); NAKAYAMA, Shigeki, Toyota-shi Aichi 471-8571 (JP); YAMAMOTO, Ichiro, Toyota-shi Aichi 471-8571 (JP); NAKAJIMA, Junya, Toyota-shi Aichi 471-8571 (JP)
(74) Representative: Smith, Samuel Leonard
(86) International application number: PCT/JP2012/065740
(87) International publication number: WO 2013/190657

(57) **Abstract**

To estimate an amount of reducing agent adsorbed to a selective reduction type NOx catalyst with a higher degree of precision while maintaining a condition in which NOx can be purified by the selective reduction type NOx catalyst, the present invention includes: an upper limit value calculation unit that calculates an upper limit value of a reducing agent amount that is adsorbed to the selective reduction type NOx catalyst when the reducing agent is supplied continuously during a steady state operation in an internal combustion engine; and an estimation unit that estimates an upper limit value calculated by the upper limit value calculation unit when the reducing agent is supplied for at least a predetermined time during the steady state operation in the internal combustion engine to be the reducing agent amount adsorbed to the selective reduction type NOx catalyst at that time.

## Description

### [TECHNICAL FIELD]

The present invention relates to an exhaust gas purification apparatus for an internal combustion engine.

### [BACKGROUND ART]

Patent Document 1 describes reducing an amount of ammonia (NH₃) actually adsorbed to a selective reduction type NOx catalyst (also referred to hereafter as an SCR catalyst) when an operating condition in which an error may occur in an amount of ammonia adsorbed to or consumed by the SCR catalyst remains continuously established. When the amount of ammonia actually adsorbed to the SCR catalyst reaches zero, an estimated value of the amount of ammonia adsorbed to the SCR catalyst is corrected to zero.

However, a reducing agent supply is stopped until the amount of ammonia adsorbed to the SCR catalyst reaches zero, and therefore a NOx purification ratio may decrease over that time.

### [PRIOR ART REFERENCES]

### [PATENT DOCUMENT]

Patent Document 1: Japanese Patent Application Publication No. 2003-286828

### [SUMMARY OF THE INVENTION]

### [PROBLEMS TO BE SOLVED BY THE INVENTION]

The present invention has been designed in consideration of the problem described above, and an object thereof is to estimate an amount of reducing agent adsorbed by a selective reduction type NOx catalyst with a higher degree of precision while maintaining a condition in which NOx can be purified by the selective reduction type NOx catalyst.

### [MEANS FOR SOLVING THE PROBLEMS]

To achieve the object described above, an exhaust gas purification apparatus for an internal combustion engine according to the present invention includes: a selective reduction type NOx catalyst that is provided in an exhaust passage of the internal combustion engine, and selectively reduces NOx when a reducing agent is supplied thereto; and a supply unit that supplies the reducing agent to the selective reduction type NOx catalyst from an upstream side of the selective reduction type NOx catalyst. Further, the exhaust gas purification apparatus includes: an upper limit value calculation unit that calculates an upper limit value of a reducing agent amount that is adsorbed to the selective reduction type NOx catalyst when the reducing agent is supplied continuously by the supply unit during a steady state operation in the internal combustion engine; and an estimation unit that estimates an upper limit value calculated by the upper limit value calculation unit when the reducing agent is supplied by the supply unit for at least a predetermined time during the steady state operation in the internal combustion engine to be the reducing agent amount adsorbed to the selective reduction type NOx catalyst at that time.

Here, when the reducing agent is supplied in a larger amount than an amount of reducing agent required to reduce NOx flowing into the selective reduction type NOx catalyst (SCR catalyst), surplus reducing agent is adsorbed to the SCR catalyst. When the reducing agent continues to be supplied to the SCR catalyst, a reducing agent amount adsorbed to the SCR catalyst per unit time becomes equal to a reducing agent amount desorbed from the SCR catalyst per unit time. At this time, the amount of reducing agent adsorbed to the SCR catalyst and the amount of reducing agent desorbed from the SCR catalyst are balanced. The reducing agent amount adsorbed to the SCR catalyst at this time serves as the upper limit value of the reducing agent amount adsorbed to the SCR catalyst.

Hence, the reducing agent amount adsorbed to the SCR catalyst has an upper limit, and once the reducing agent amount adsorbed to the SCR catalyst has reached the upper limit value, the reducing agent amount adsorbed to the SCR catalyst does not increase even when the reducing agent continues to be supplied. Instead, the reducing agent is desorbed from the SCR catalyst. Note that the reducing agent is desorbed from the SCR catalyst likewise when a temperature of the SCR catalyst increases. The reducing agent desorbed from the SCR catalyst flows out of the SCR catalyst after being oxidized, or flows out of the SCR catalyst as is.

Note that the reducing agent amount adsorbed to the SCR catalyst per unit time (also referred to as a reducing agent adsorption speed hereafter) may also be set as a difference between a reducing agent amount flowing into the SCR catalyst per unit time (also referred to hereafter as a reducing agent inflow speed) and a reducing agent amount consumed by the SCR catalyst per unit time (also referred to hereafter as a reducing agent consumption speed) . Further, the reducing agent consumption speed has a correlative relationship with an amount of NOx reduced by the SCR catalyst per unit time. Hence, when the reducing agent amount adsorbed to the SCR catalyst has not yet reached the upper limit value, the reducing agent amount adsorbed to the SCR catalyst per unit time is equal to a reducing agent surplus generated in the SCR catalyst per unit time. It is assumed that the entire reducing agent surplus generated in the SCR catalyst is adsorbed to the SCR catalyst.

Hereafter, a reducing agent amount desorbed from the SCR catalyst per unit time will be referred to as a "reducing agent desorption speed". The reducing agent amount desorbed from the SCR catalyst is the amount of reducing agent that is desorbed from the SCR catalyst without reducing NOx.

Further, an overall reducing agent amount adsorbed to the SCR catalyst will be referred to as a reducing agent adsorption amount, and the overall reducing agent amount adsorbed to the SCR catalyst when the reducing agent adsorption speed and the reducing agent desorption speed are balanced will be referred to as a balanced adsorption amount. The balanced adsorption amount serves as the upper limit value of the reducing agent amount adsorbed to the SCR catalyst.

In the SCR catalyst, the reducing agent adsorption speed decreases and the reducing agent desorption speed increases as the reducing agent adsorption amount increases. Conversely, in the SCR catalyst, the reducing agent adsorption speed increases and the reducing agent desorption speed decreases as the reducing agent adsorption amount decreases. Hence, when the reducing agent is supplied continuously at a constant reducing agent supply amount per unit time during a steady state operation in the internal combustion engine, the reducing agent adsorption speed and the reducing agent desorption speed gradually approach a balanced condition.

As long as conditions such as the temperature of the SCR catalyst remain constant, the ease with which the reducing agent is adsorbed to the SCR catalyst and the ease with which the reducing agent is desorbed from the SCR catalyst never vary. Hence, when the conditions remain constant, the balanced adsorption amount takes an identical value, and therefore the upper limit value calculation unit can calculate the upper limit value of the reducing agent amount adsorbed to the SCR catalyst, or in other words the balanced adsorption amount, in accordance with operating conditions of the internal combustion engine and so on. Note that the upper limit value may be determined using a stored map, model, equation, or the like.

When the reducing agent adsorption amount is balanced, the estimation unit estimates the reducing agent adsorption amount to be equal to the upper limit value. In other words, when the reducing agent adsorption amount is balanced, the actual reducing agent adsorption amount is equal to the balanced adsorption amount, and therefore the estimated value of the reducing agent adsorption amount is set at an identical value to the balanced adsorption amount. In so doing, the estimation precision of the reducing agent adsorption amount can be improved. Further, the reducing agent adsorption amount can be estimated in a condition where reducing agent is adsorbed to the SCR catalyst, and therefore the NOx purification ratio of the SCR catalyst does not decrease.

Note that the estimation unit may estimate the reducing agent adsorption amount on the basis of the reducing agent amount flowing into the SCR catalyst and the reducing agent amount consumed by the SCR catalyst. When the reducing agent adsorption amount is estimated in this manner, an error may be included therein. Hence, when the reducing agent is supplied by the supply unit for at least the predetermined time during a steady state operation in the internal combustion engine, the estimation unit may correct the estimated value of the reducing agent amount adsorbed to the selective reduction type NOx catalyst so that the estimated value equals the upper limit value. For example, the reducing agent amount adsorbed to the SCR catalyst may be estimated on the basis of a difference between the reducing agent amount flowing into the SCR catalyst and the reducing agent amount consumed by the SCR catalyst. Further, for example, the reducing agent amount adsorbed to the SCR catalyst may be estimated on the basis of the reducing agent amount flowing into the SCR catalyst, the reducing agent amount consumed by the SCR catalyst, and the reducing agent amount desorbed from the SCR catalyst. The reducing agent amount consumed by the SCR catalyst may be calculated on the basis of the amount of NOx flowing into the SCR catalyst or the NOx purification ratio of the SCR catalyst.

Note that the predetermined time may be set as a time required for the reducing agent amount adsorbed to the SCR catalyst to reach the upper limit value when the reducing agent is supplied continuously by the supply unit during a steady state operation in the internal combustion engine. In other words, the predetermined time may be set as a time required for the reducing agent adsorption amount to reach the balanced adsorption amount. The predetermined time may be determined in accordance with the operating conditions of the internal combustion engine.

Furthermore, according to the present invention, the estimation unit may shorten the predetermined time steadily as the temperature of the selective reduction type NOx catalyst increases.

Here, the balanced adsorption amount increases as the temperature of the SCR catalyst decreases, and decreases as the temperature of the SCR catalyst increases. Accordingly, the time required for the reducing agent adsorption amount to reach the balanced adsorption amount lengthens as the temperature of the SCR catalyst decreases, and shortens as the temperature of the SCR catalyst increases. When the reducing agent adsorption amount reaches the balanced adsorption amount, the reducing agent adsorption amount can be estimated, and therefore the predetermined time can be shortened as the temperature of the SCR catalyst increases. As a result, the reducing agent adsorption amount can be estimated in a minimum required time.

Furthermore, according to the present invention, the estimation unit may perform the estimation when the temperature of the selective reduction type NOx catalyst equals or exceeds a predetermined temperature.

Here, the balanced adsorption amount decreases as the temperature of the SCR catalyst increases. Further, when the temperature of the SCR catalyst is high, the NOx purification ratio increases even with a small reducing agent adsorption amount. When the temperature of the SCR catalyst is high, therefore, the time required to estimate the reducing agent adsorption amount is shorter than when the temperature of the SCR catalyst is low, and moreover, the NOx purification ratio can be kept high. Hence, by estimating the reducing agent adsorption amount when the temperature of the SCR catalyst equals or exceeds the predetermined temperature, the reducing agent adsorption amount can be estimated quickly while suppressing a reduction in the NOx purification ratio. The predetermined temperature is determined such that the time required for the reducing agent adsorption amount to reach the balanced adsorption amount remains within an allowable range. Note that when the predetermined temperature is too high, fewer opportunities arise to estimate the reducing agent adsorption amount, and therefore the predetermined temperature may be determined such that a frequency with which the reducing agent adsorption amount is estimated remains within an allowable range. Moreover, when the predetermined temperature is too high, the reducing agent adsorption amount may become too small, leading to a reduction in the NOx purification ratio. Hence, the predetermined temperature may be determined such that the NOx purification ratio does not fall below a lower limit value of an allowable range.

The present invention may further include a temperature increasing unit that increases the temperature of the selective reduction type NOx catalyst to or above the predetermined temperature when the temperature of the selective reduction type NOx catalyst is lower than the predetermined temperature.

Depending on the operating conditions of the internal combustion engine, the temperature of the SCR catalyst may not reach or exceed the predetermined temperature. When such operating conditions remain established for a long time, it may become difficult to estimate the reducing agent adsorption amount, and the estimation error in the reducing agent adsorption amount may increase. When the temperature of the SCR catalyst is raised to or above the predetermined temperature, however, the reducing agent adsorption amount can be estimated. Moreover, the frequency with which the reducing agent adsorption amount is estimated can be increased.

Furthermore, according to the present invention, during the estimation, the supply unit may reduce the amount of reducing agent supplied to the selective reduction type NOx catalyst below an amount of reducing agent required to reduce all of the NOx flowing into the selective reduction type NOx catalyst.

In other words, the reducing agent adsorption amount is caused to converge on the balanced adsorption amount while maintaining a condition in which the amount of reducing agent is insufficient relative to the amount of NOx flowing into the SCR catalyst. When the amount of reducing agent is insufficient, the balanced adsorption amount is less likely to vary even in response to variation in the reducing agent supply amount. Therefore, the estimation precision of the reducing agent adsorption amount can be improved. Likewise in this case, the reducing agent is adsorbed to the SCR catalyst, and therefore a reduction in the NOx purification ratio can be suppressed.

### [EFFECT OF THE INVENTION]

According to the present invention, the amount of reducing agent adsorbed to the selective reduction type NOx catalyst can be estimated with a higher degree of precision while maintaining a condition in which NOx can be purified by the selective reduction type NOx catalyst.

### [BRIEF DESCRIPTION OF THE DRAWINGS]

Fig. 1 is a schematic view showing a configuration of an exhaust gas purification apparatus for an internal combustion engine according to an embodiment;
Fig. 2 is a time chart showing a transition of a reducing agent adsorption amount in a case where a reducing agent is supplied from a condition in which the reducing agent adsorption amount is zero;
Fig. 3 is a view showing a relationship between a reducing agent adsorption speed and a balanced adsorption amount at respective SCR catalyst temperatures;
Fig. 4 is a view showing a transition of the reducing agent adsorption amount according to a first embodiment;
Fig. 5 is a view showing a transition of the reducing agent adsorption amount in a case where the reducing agent adsorption amount is reduced to zero when correcting an estimated value of the reducing agent adsorption amount;
Fig. 6 is a flowchart showing a flow for correcting the estimated value of the reducing agent adsorption amount according to the first embodiment;
Fig. 7 is a time chart showing the transition of the reducing agent adsorption amount;
Fig. 8 is a view showing a relationship between a reducing agent supply amount and the balanced adsorption amount;
Fig. 9 is a time chart showing transitions of the SCR catalyst temperature and the reducing agent adsorption amount; and
Fig. 10 is a flowchart showing a flow for correcting the estimated value of the reducing agent adsorption amount according to a second embodiment.

### [MODES FOR CARRYING OUT THE INVENTION]

Specific embodiments of an exhaust gas purification apparatus for an internal combustion engine according to the present invention will be described below on the basis of the drawings.

### (First Embodiment)

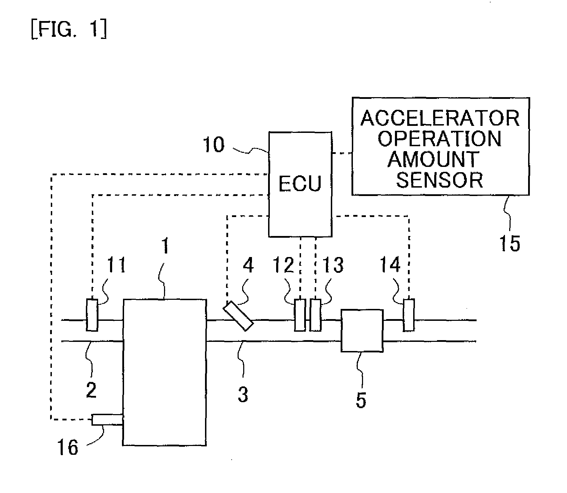

Fig. 1 is a schematic view showing a configuration of an exhaust gas purification apparatus for an internal combustion engine according to an embodiment. An internal combustion engine 1 shown in Fig. 1 is a diesel engine, but may be a gasoline engine. The internal combustion engine 1 is installed in a vehicle, for example.

An intake passage 2 and an exhaust passage 3 are connected to the internal combustion engine 1. An air flow meter 11 that detects an amount of intake air flowing through the intake passage 2 is provided in the intake passage 2. Meanwhile, an injection valve 4 and a selective reduction type NOx catalyst 5 (referred to hereafter as an SCR catalyst 5) are provided in the exhaust passage 3 in order from an upstream side in an exhaust gas flow direction.

The injection valve 4 opens when a reducing agent is injected and closes when injection of the reducing agent is stopped. Ammonia (NH₃) is used as the reducing agent. Note that the injection valve 4 may inject urea water instead of ammonia. The urea water injected by the injection valve 4 is hydrolyzed into ammonia in the SCR catalyst 5, and then adsorbed to the SCR catalyst 5. In other words, either ammonia or a substance that ultimately changes into ammonia may be supplied from the injection valve 4. Further, the reducing agent may be supplied in the condition of a solid, a liquid, or a gas. In this embodiment, the injection valve 4 corresponds to a supply unit of the present invention.

Furthermore, the SCR catalyst 5 selectively reduces NOx using the adsorbed reducing agent. Therefore, by having the SCR catalyst 5 adsorb ammonia as the reducing agent in advance, the ammonia can be used to reduce NOx.

A temperature sensor 12 that detects an exhaust gas temperature is provided in the exhaust passage 3 on an upstream side of the SCR catalyst 5. The temperature sensor 12 detects the temperature of exhaust gas flowing into the SCR catalyst 5. A temperature of the SCR catalyst 5 can be estimated on the basis of the exhaust gas temperature. Note that a measurement value of the temperature sensor 12 may be set as the temperature of the SCR catalyst 5. Further, a temperature sensor may be attached on a downstream side of the SCR catalyst 5, and a measurement value of this temperature sensor may be set as the temperature of the SCR catalyst 5. Furthermore, the temperature of the SCR catalyst 5 may be measured by attaching a temperature sensor directly to the SCR catalyst 5. Moreover, the temperature of the SCR catalyst 5 may be estimated on the basis of operating conditions of the internal combustion engine 1. For example, an engine rotation speed, a fuel injection amount, an intake air amount, and the temperature of the SCR catalyst 5 have a correlative relationship, and therefore relationships between these elements may be determined in advance by experiments and the like, and plotted on a map.

Further, a first NOx sensor 13 that detects a NOx concentration of the exhaust gas is provided in the exhaust passage 3 on the upstream side of the SCR catalyst 5. Furthermore, a second NOx sensor 14 that detects the NOx concentration of the exhaust gas is provided in the exhaust passage 3 on the downstream side of the SCR catalyst 5. With the first NOx sensor 13, the NOx concentration of the exhaust gas flowing into the SCR catalyst 5 can be measured. With the second NOx sensor 14, the NOx concentration of the exhaust gas flowing out of the SCR catalyst 5 can be measured. A NOx purification ratio of the SCR catalyst 5 can be calculated on the basis of measurement values of the first NOx sensor 13 and the second NOx sensor 14. The NOx purification ratio is a ratio between the amount of NOx flowing into the SCR catalyst 5 and the amount of NOx purified by the SCR catalyst 5. The NOx purification ratio can therefore be calculated by dividing a value obtained by subtracting the measurement value of the second NOx sensor 14 from the measurement value of the first NOx sensor 13 by the measurement value of the first NOx sensor 13.

Note that an oxidation catalyst and a particulate filter may be provided in the exhaust passage 3 on the upstream side of the injection valve 4.

An ECU 10 is installed side by side with the internal combustion engine 1, configured as described above, as an electronic control unit for controlling the internal combustion engine 1. The ECU 10 controls the internal combustion engine 1 in accordance with the operating conditions of the internal combustion engine 1 and requirements of a driver.

In addition to the sensors described above, an accelerator operation amount sensor 15 capable of detecting an engine load by outputting an electric signal corresponding to a depression amount of an accelerator pedal, and a crank position sensor 16 that detects the engine rotation speed are connected to the ECU 10 via electric wires such that output signals from the sensors are input into the ECU 10. Meanwhile, the injection valve 4 is connected to the ECU 10 via an electric wire such that the injection valve 4 is controlled by the ECU 10.

The ECU 10 estimates a reducing agent adsorption amount in the SCR catalyst 5, and adjusts a reducing agent supply amount from the injection valve 4 so that an estimated value of the reducing agent adsorption amount approaches a target value. At this time, the ECU 10 adjusts the reducing agent supply amount so that a target NOx purification ratio is achieved and no reducing agent flows out of the SCR catalyst 5, for example.

Here, an amount of reducing agent adsorbed to the SCR catalyst per unit time (a reducing agent adsorption speed) is equal to a reducing agent surplus generated in the SCR catalyst per unit time. In other words, the reducing agent adsorption speed takes a value obtained by subtracting an amount of reducing agent consumed by the SCR catalyst 5 per unit time (a reducing agent consumption speed) from an amount of reducing agent supplied from the injection valve 4 per unit time (a reducing agent inflow speed). It is assumed that the entire reducing agent surplus is adsorbed to the SCR catalyst 5. The reducing agent adsorption amount can be estimated by integrating the reducing agent adsorption speed, for example. Note that the reducing agent adsorption speed can be determined by subtracting the reducing agent consumption speed from the reducing agent inflow speed.

The reducing agent adsorption amount may also be estimated as follows. When the reducing agent is supplied continuously to the SCR catalyst 5, as long as the operating conditions of the internal combustion engine 1 do not vary, the reducing agent adsorption amount converges on a balanced adsorption amount. When the reducing agent adsorption amount converges on the balanced adsorption amount, the reducing agent adsorption speed and a reducing agent desorption speed become equal. After the reducing agent adsorption amount has reached the balanced adsorption amount, therefore, as long as the reducing agent supply amount and the operating conditions of the internal combustion engine 1 do not vary, the reducing agent adsorption amount does not increase even when the reducing agent continues to be supplied. When the reducing agent adsorption amount is equal to the balanced adsorption amount, the reducing agent adsorption amount reaches an upper limit value under the conditions established at that time.

Further, as long as the operating conditions of the internal combustion engine 1 do not vary, a transition of the reducing agent adsorption amount while the reducing agent is supplied is identical each time. For example, as long as the reducing agent adsorption speed and the temperature of the SCR catalyst 5 do not vary, the balanced adsorption amount is identical each time, and the transition of the reducing agent adsorption amount to the balanced adsorption amount is identical each time. Hence, by determining the transition of the reducing agent adsorption amount in advance in association with these conditions, a subsequent transition of the reducing agent adsorption amount can be estimated from the reducing agent adsorption amount and the conditions established at that time. This relationship may be determined in advance by experiments or the like. By storing the relationship in the ECU 10 in the form of a map, a model, or an equation, a reducing agent adsorption amount at a specific time before reaching the balanced adsorption amount can be estimated from an initial value of the reducing agent adsorption amount and an elapsed time.

The estimated value of the reducing agent adsorption amount determined in this manner may include an error. For example, when a deviation occurs between an instructed value and an actual value of the reducing agent supply amount per unit time, a deviation occurs between the estimated value and an actual value of the reducing agent adsorption amount. Further, when the reducing agent consumption amount is calculated by estimating the NOx purification ratio and an estimation precision of the NOx purification ratio is low, a deviation occurs between the estimated value and the actual value of the reducing agent adsorption amount. Moreover, the reducing agent adsorption amount varies in accordance with the reducing agent that is desorbed from the SCR catalyst 5, and therefore, when the amount of reducing agent desorbed from the SCR catalyst 5 is not taken into account, or the amount of reducing agent desorbed from the SCR catalyst 5 is taken into account but cannot be determined accurately, a deviation occurs between the estimated value and the actual value of the reducing agent adsorption amount.

When the reducing agent supply amount is adjusted on the basis of an estimated value of the reducing agent adsorption amount including an error, the reducing agent supply amount may be inappropriate. For example, when the estimated value of the reducing agent adsorption amount is larger than the actual value such that the reducing agent supply amount is reduced, the amount of reducing agent may become insufficient, leading to a reduction in the NOx purification ratio. When the estimated value of the reducing agent adsorption amount is smaller than the actual value such that the reducing agent supply amount is increased, on the other hand, the reducing agent may flow out of the SCR catalyst 5.

Hence, in this embodiment, when the reducing agent adsorption amount converges on the balanced adsorption amount, the estimated value of the reducing agent adsorption amount is corrected so that the estimated value of the reducing agent adsorption amount becomes equal to the balanced adsorption amount. In other words, when the reducing agent adsorption amount is estimated after the reducing agent adsorption amount has converged on the balanced adsorption amount, the estimated value of the reducing agent adsorption amount is set at an equal value to the balanced adsorption amount.

Here, the reducing agent adsorption speed decreases and the reducing agent desorption speed increases as the reducing agent adsorption amount increases. Conversely, the reducing agent adsorption speed increases and the reducing agent desorption speed decreases as the reducing agent adsorption amount decreases. Accordingly, an amount by which the reducing agent adsorption amount increases per unit time decreases as the reducing agent adsorption amount approaches the balanced adsorption amount. Once a sufficient time has elapsed, the reducing agent adsorption amount converges on the balanced adsorption amount.

Hence, when a sufficient amount of time elapses following the start of supply of the reducing agent while the operating conditions of the internal combustion engine 1 remain unchanged, it may be considered that an identical amount of reducing agent to the balanced adsorption amount has been adsorbed to the SCR catalyst 5. Therefore, by setting the estimated value of the reducing agent adsorption amount at an identical value to the balanced adsorption amount at this time, an accumulated error can be removed.

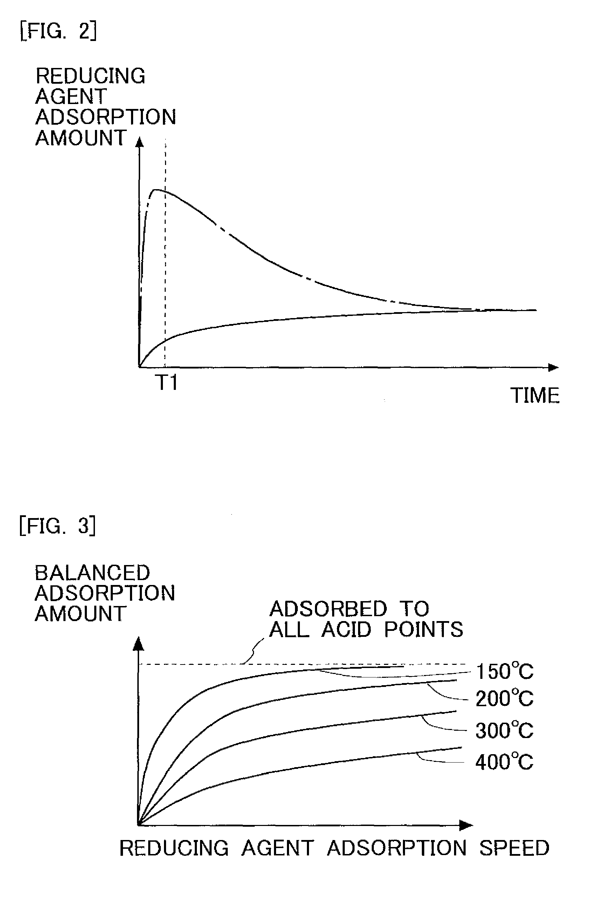

Fig. 2 is a time chart showing a transition of the reducing agent adsorption amount in a case where the reducing agent is supplied from a condition in which the reducing agent adsorption amount is zero. A solid line shows a case in which the reducing agent supply amount per unit time is constant. A dot-dash line shows a case in which the reducing agent supply amount per unit time at the start of supply of the reducing agent is larger than that of the case shown by the solid line, but from a point indicated by T1, the reducing agent supply amount per unit time is set at an identical value to that of the case shown by the solid line. Hence, even when initial reducing agent supply amounts differ, the reducing agent adsorption amount converges on an identical value following the elapse of a sufficient amount of time from the point T1 at which the reducing agent supply amounts per unit time become identical.

Note that the balanced adsorption amount is determined in accordance with the temperature of the SCR catalyst 5 and the reducing agent adsorption speed. Here, Fig. 3 is a view showing a relationship between the reducing agent adsorption speed and the balanced adsorption amount at respective temperatures of the SCR catalyst 5. In Fig. 3, "Adsorbed to all acid points" indicates a reducing agent adsorption amount generated when the reducing agent is adsorbed to all acid points serving as locations of the SCR catalyst 5 to which the reducing agent is adsorbed. This reducing agent adsorption amount is generated when a theoretical maximum amount of reducing agent is adsorbed to the SCR catalyst 5.

As shown in Fig. 3, when the temperature of the SCR catalyst 5 does not vary, the balanced adsorption amount increases as the reducing agent adsorption speed increases. Further, when the reducing agent adsorption speed does not vary, the balanced adsorption amount decreases as the temperature of the SCR catalyst 5 increases. Hence, when the SCR catalyst 5 and the reducing agent adsorption speed are known, the balanced adsorption amount can be determined from the relationship shown in Fig. 3.

Furthermore, according to this embodiment, the reducing agent adsorption amount is determined to have reached the balanced adsorption amount when the temperature of the SCR catalyst 5 and the reducing agent adsorption speed remain constant continuously for a predetermined time. The reducing agent adsorption amount may also be determined to have reached the balanced adsorption amount when a steady state operation is performed continuously in the internal combustion engine 1 for a predetermined time. In other words, when a steady state operation is performed in the internal combustion engine 1, it is possible for the temperature of the SCR catalyst 5 and the reducing agent adsorption speed to become constant. The predetermined time can be determined in advance by experiments and the like as a time required for the reducing agent adsorption amount to converge. Further, by determining the relationship shown in Fig. 3 in advance by experiments and the like, the balanced adsorption amount can be determined on the basis of the temperature of the SCR catalyst 5 and the reducing agent adsorption speed.

By setting the balanced adsorption amount determined in this manner at the estimated value of the reducing agent adsorption amount at that time, and adding a subsequent amount of variation in the reducing agent adsorption amount to the estimated value, the subsequent reducing agent adsorption amount can be estimated with a high degree of precision.

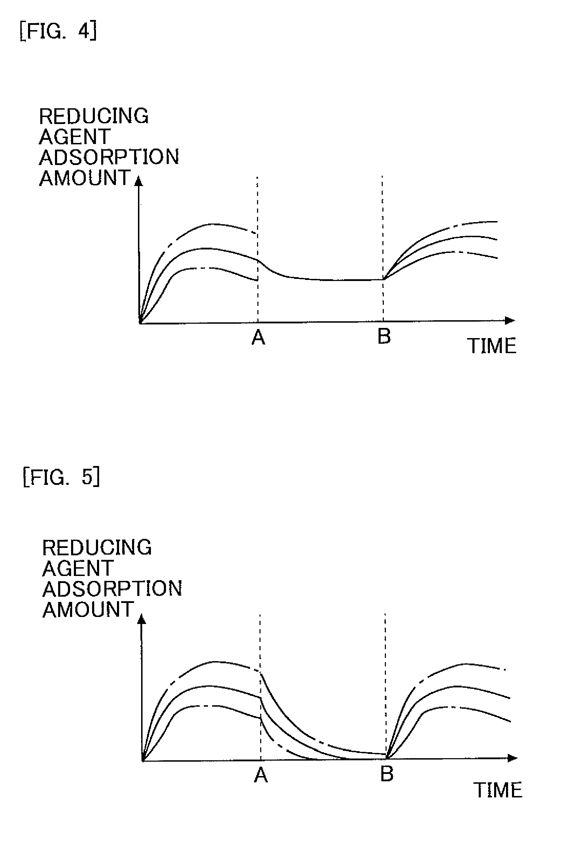

Here, Fig. 4 is a view showing a transition of the reducing agent adsorption amount according to this embodiment, and Fig. 5 is a view showing a transition of the reducing agent adsorption amount in a case where the reducing agent adsorption amount is reduced to zero when correcting the estimated value of the reducing agent adsorption amount. Solid lines show the actual reducing agent adsorption amount, and dot-dash lines show the estimated value of the reducing agent adsorption amount including an error. Supply of the reducing agent is stopped for a period extending from A to B in Fig. 5, and over this period, the actual reducing agent adsorption amount decreases to zero. A period extending from A to B in Fig. 4 is identical to the period extending from A to B in Fig. 5, but in the period extending from A to B in Fig. 4, the reducing agent is supplied. Note that the transition of the reducing agent adsorption amount up to the point indicated by A is identical in Figs. 4 and 5.

Here, as shown in Fig. 5, when the reducing agent supply is stopped so that the reducing agent adsorption amount falls to zero, the reducing agent adsorption amount can be corrected by setting the estimated value of the reducing agent adsorption amount at that time at zero. In other words, by correcting the estimated value of the reducing agent adsorption amount to zero when the actual value is at zero, the error accumulated in the reducing agent adsorption amount up to that point can be removed.

However, when the reducing agent supply is stopped over the period extending from A to B, as shown in Fig. 5, the actual reducing agent adsorption amount decreases over and immediately after the period extending from A to B. As a result, the amount of reducing agent may become insufficient, leading to a reduction in the NOx purification ratio. In this embodiment, as shown in Fig. 4, on the other hand, the reducing agent is supplied continuously over the period extending from A to B so that the reducing agent adsorption amount converges on the balanced adsorption amount. By correcting the estimated value of the reducing agent adsorption amount at this time, a sufficient reducing agent adsorption amount can be maintained, and therefore a reduction in the NOx purification ratio can be suppressed when correcting the estimated value of the reducing agent adsorption amount.

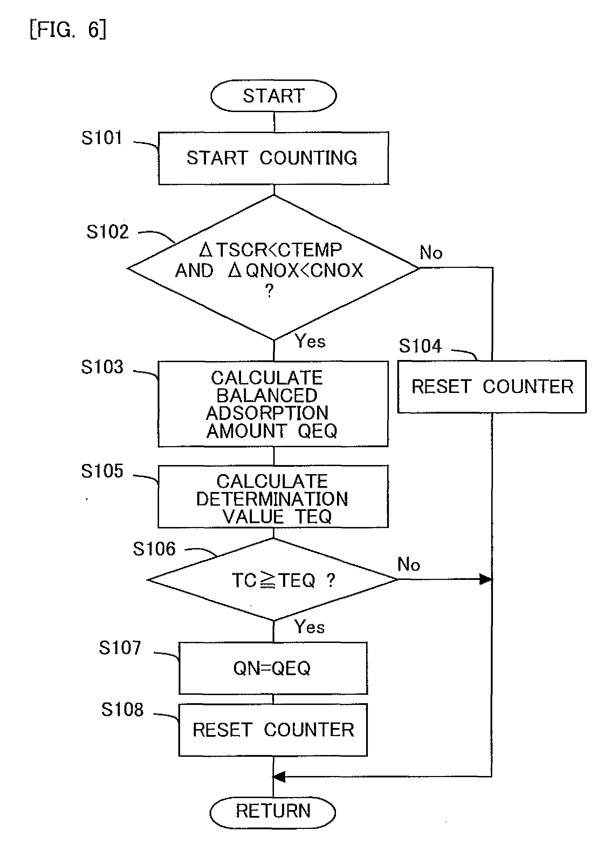

Fig. 6 is a flowchart showing a flow for correcting the estimated value of the reducing agent adsorption amount according to this embodiment. This routine is executed by the ECU 10 at preset time intervals.

In step S101, counting by a counter is started. The counter according to this embodiment counts time, but a distance traveled by the vehicle may be counted instead. A determination as to whether or not the reducing agent adsorption amount has converged is made in accordance with a value on the counter. When the processing of step S101 is complete, the routine advances to step S102.

In step S102, a determination is made as to whether or not an amount of variation ΔTSCR in the temperature of the SCR catalyst 5 per unit time is smaller than a threshold CTEMP and an amount of variation ΔQNOX in an amount of NOx flowing into the SCR catalyst 5 per unit time is smaller than a threshold CNOX. In this step, a determination is made as to whether or not a steady state operation is underway. In other words, this step is performed to determine whether or not it is possible for the reducing agent adsorption amount to converge.

Here, the balanced adsorption amount varies in accordance with the temperature of the SCR catalyst 5 and the reducing agent adsorption speed, and therefore, when the temperature of the SCR catalyst 5 and the reducing agent adsorption speed are not constant, the reducing agent adsorption amount does not converge on the balanced adsorption amount. Hence, a determination is made in step S102 as to whether or not the temperature of the SCR catalyst 5 and the reducing agent adsorption speed are constant. Note that for the reducing agent adsorption speed to become constant, the amount of NOx flowing into the SCR catalyst 5 per unit time must be constant. Accordingly, a determination as to whether or not the amount of NOx flowing into the SCR catalyst 5 per unit time is constant is made in this step. The threshold CTEMP of the amount of variation ΔTSCR in the temperature of the SCR catalyst 5 per unit time is set as a lower limit value of a range in which it may be assumed that variation is occurring in the temperature of the SCR catalyst 5. Further, the threshold CNOX of the amount of variation ΔQNOX in the amount of NOx flowing into the SCR catalyst 5 per unit time is set as a lower limit value of a range in which it may be assumed that variation is occurring in the amount of NOx flowing into the SCR catalyst 5 per unit time.

Optimum values of the threshold CTEMP of the amount of variation ΔTSCR in the temperature of the SCR catalyst 5 per unit time and the threshold CNOX of the amount of variation ΔQNOX in the amount of NOx flowing into the SCR catalyst 5 per unit time are determined in advance by experiments and the like, and stored in the ECU 10. For example, even when the amount of variation ΔTSCR in the temperature of the SCR catalyst 5 per unit time or the amount of variation ΔQNOX in the amount of NOx flowing into the SCR catalyst 5 per unit time is larger than zero, as long as variation therein remains within a margin of error or an allowable range, the temperature of the SCR catalyst 5 or the amount of NOx flowing into the SCR catalyst 5 is determined to be constant.

When the determination of step S102 is affirmative, the routine advances to step S103. When the determination of step S102 is negative, on the other hand, the routine advances to step S104, where the value on the counter is reset. In other words, the value on the counter is set at zero. When the processing of step S104 is complete, the routine is terminated.

In step S103, a balanced adsorption amount QEQ is calculated. The balanced adsorption amount QEQ is calculated from the reducing agent adsorption speed and the temperature of the SCR catalyst 5. The balanced adsorption amount QEQ may be determined on the basis of the relationship shown in Fig. 3. The relationship shown in Fig. 3 is determined in advance by experiments and the like, and stored in the ECU 10. Note that in this embodiment, the ECU 10 that performs the processing of step S103 corresponds to an upper limit value calculation unit of the present invention. When the processing of step S103 is complete, the routine advances to step S105.

In step S105, a determination value TEQ is calculated. The determination value TEQ is a time required for the reducing agent adsorption amount to reach the balanced adsorption amount after the temperature of the SCR catalyst 5 and the reducing agent adsorption speed become constant.

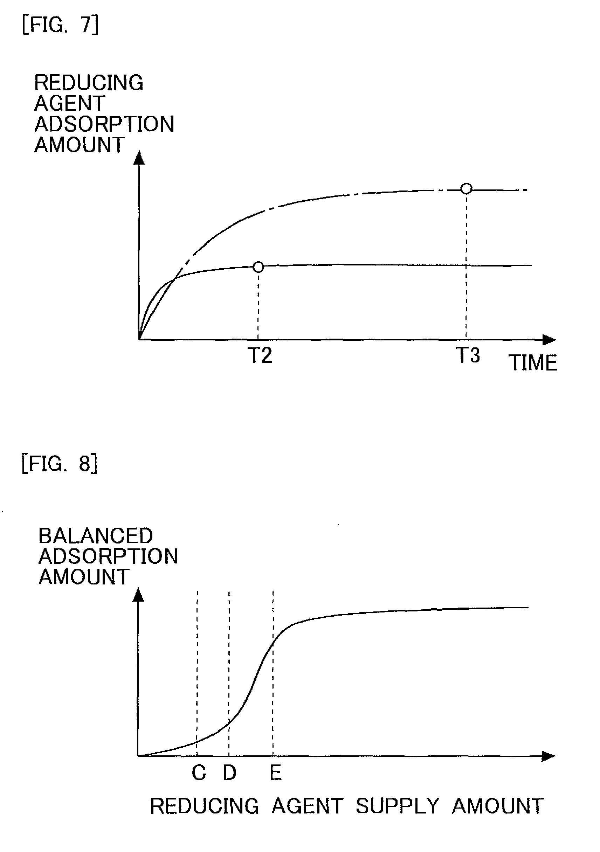

Here, Fig. 7 is a time chart showing the transition of the reducing agent adsorption amount. A solid line shows a case in which the temperature of the SCR catalyst 5 is comparatively high, and a dot-dash line shows a case in which the temperature of the SCR catalyst 5 is comparatively low. When the temperature of the SCR catalyst 5 is comparatively high, the reducing agent adsorption amount converges at a point indicated by T2. When the temperature of the SCR catalyst 5 is comparatively low, the reducing agent adsorption amount converges at a point indicated by T3.

Hence, the time required for the reducing agent adsorption amount to reach the balanced adsorption amount varies in accordance with the temperature of the SCR catalyst 5. As the temperature of the SCR catalyst 5 increases, the balanced adsorption amount decreases and the time required to reach the balanced adsorption amount shortens. Since the time required for the reducing agent adsorption amount to reach the balanced adsorption amount shortens as the temperature of the SCR catalyst 5 rises, the estimated value of the reducing agent adsorption amount can be corrected in a shorter amount of time.

Accordingly, the determination value TEQ is set at a steadily smaller value as the temperature of the SCR catalyst 5 increases. A relationship between the determination value TEQ and the temperature of the SCR catalyst 5 is determined in advance by experiments and the like, and stored in the ECU 10. When the processing of step S105 is complete, the routine advances to step S106.

In step S106, a determination is made as to whether or not a value TC of the counter equals or exceeds the determination value TEQ. In this step, a determination is made as to whether or not the reducing agent adsorption amount has reached the balanced adsorption amount. When the determination of step S106 is affirmative, the routine advances to step S107, and when the determination is negative, the routine is terminated.

In step S107, an estimated value QN of the reducing agent adsorption amount is corrected. In this step S, the estimated value QN of the reducing agent adsorption amount is made equal to the balanced adsorption amount QEQ. In other words, the balanced adsorption amount QEQ is estimated to be the reducing agent adsorption amount at that time. Note that in this embodiment, the ECU 10 that performs the processing of step S107 corresponds to an estimation unit of the present invention. When the processing of step S107 is complete, the routine advances to step S108. In step S108, the value on the counter is reset, whereupon the routine is terminated.

By correcting the estimated value of the reducing agent adsorption amount to the balanced adsorption amount when the reducing agent adsorption amount has converged on the balanced adsorption amount in this manner, the precision with which the reducing agent adsorption amount is estimated subsequently can be improved. As a result, the reducing agent supply amount can be set appropriately. In other words, a situation in which the reducing agent supply amount is excessive such that the reducing agent flows out of the SCR catalyst 5 can be prevented. Further, a situation in which the reducing agent supply amount is insufficient such that the NOx purification ratio of the SCR catalyst 5 decreases can be prevented. Moreover, there is no need to reduce the reducing agent adsorption amount to zero, and therefore a reduction in the NOx purification ratio can be suppressed.

Note that the reducing agent supply amount during correction of the estimated value of the reducing agent adsorption amount may be set at a reducing agent supply amount within a range where an amount of variation in the balanced adsorption amount is smaller than an amount of variation in the reducing agent supply amount. This reducing agent supply amount is set at a multiple of 0.8 to 1 relative to an amount of reducing agent at which the exact amount of NOx flowing into the SCR catalyst 5 is reduced, or in other words a reducing agent supply amount having an equivalent ratio between 0.8 and 1. To put it another way, the reducing agent supply amount is set within a range where the amount of reducing agent is slightly insufficient relative to the amount of NOx flowing into the SCR catalyst 5.

Fig. 8 is a view showing a relationship between the reducing agent supply amount and the balanced adsorption amount. In Fig. 8, D denotes the reducing agent supply amount required to reduce the exact amount of NOx flowing into the SCR catalyst 5, or in other words a reducing agent supply amount having an equivalent ratio of 1. Here, a range extending from C to D, in which the reducing agent supply amount is slightly smaller than D, is compared with a range extending from D to E, in which the reducing agent supply amount is slightly larger than D. When the reducing agent supply amount is smaller than D, the amount of variation in the balanced adsorption amount relative to the amount of variation in the reducing agent supply amount is comparatively small. When the reducing agent supply amount is larger than D, on the other hand, the amount of variation in the balanced adsorption amount relative to the amount of variation in the reducing agent supply amount is comparatively large. Hence, the balanced adsorption amount is less likely to vary in response to variation in the reducing agent supply amount when the reducing agent supply amount is smaller than D than when the reducing agent supply amount is larger than D, and accordingly, the reducing agent adsorption amount is more likely to converge on the balanced adsorption amount. Moreover, the reducing agent adsorption amount converges even though the amount of reducing agent is insufficient.

In other words, to cause the reducing agent adsorption amount to converge on the balanced adsorption amount, the reducing agent supply amount should be adjusted to between 80% and 100% of the amount of reducing agent required to reduce the exact amount of NOx flowing into the SCR catalyst 5. In so doing, even though the amount of reducing agent is slightly insufficient relative to the NOx flowing into the SCR catalyst 5, the reduction in the NOx purification ratio is small. Moreover, the balanced adsorption amount is unlikely to vary, and therefore the reducing agent adsorption amount is more likely to converge on the balanced adsorption amount. In other words, a suitable condition for correcting the estimated value of the reducing agent adsorption amount is established.

Note that when the reducing agent supply amount is too small, the NOx purification ratio may decrease, and therefore the reducing agent supply amount may be adjusted within an allowable range of the NOx purification ratio.

### (Second Embodiment)

In this embodiment, the estimated value of the reducing agent adsorption amount is corrected when the temperature of the SCR catalyst 5 equals or exceeds a predetermined temperature. Further, when the temperature of the SCR catalyst 5 is lower than the predetermined temperature, the estimated value of the reducing agent adsorption amount is corrected after raising the temperature of the SCR catalyst 5 to or above the predetermined temperature. All other apparatuses and so on are identical to the first embodiment, and therefore description thereof has been omitted.

When the temperature of the SCR catalyst 5 is high, the reducing agent is desorbed easily, leading to a reduction in the balanced adsorption amount. Accordingly, the reducing agent adsorption amount reaches the balanced adsorption amount more quickly, and as a result, the estimated value of the reducing agent adsorption amount can be corrected in a shorter amount of time.

Further, when the temperature of the SCR catalyst 5 is high, the SCR catalyst 5 becomes more active, and therefore the NOx purification ratio increases even with a small reducing agent adsorption amount. As a result, the NOx purification ratio during correction of the estimated value of the reducing agent adsorption amount can be kept high. Moreover, when the temperature of the SCR catalyst 5 is high, the actual reducing agent adsorption amount decreases, and therefore the amount of variation in the reducing agent adsorption amount remains small even following variation in the temperature of the SCR catalyst 5. Accordingly, the amount of variation in the balanced adsorption amount decreases, and as a result, the estimated value of the reducing agent adsorption amount can be corrected more easily.

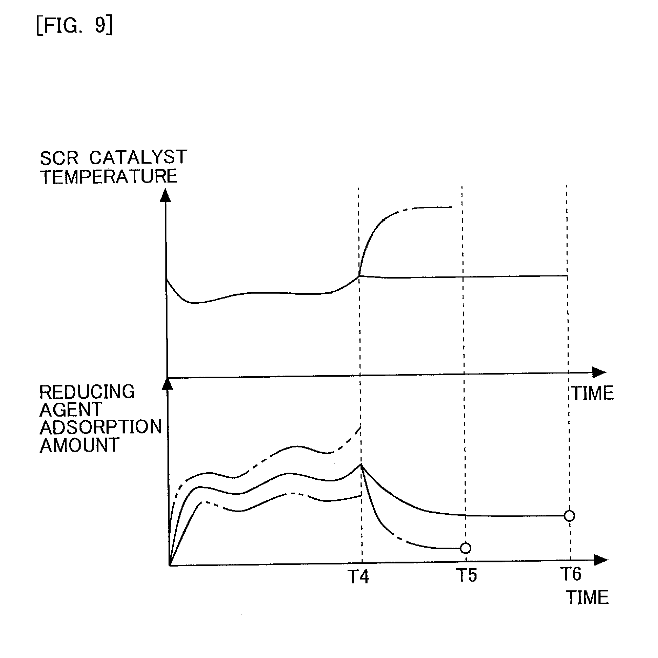

Fig. 9 is a time chart showing transitions of the temperature of the SCR catalyst temperature 5 and the reducing agent adsorption amount. Solid lines show a case in which the temperature of the SCR catalyst 5 is not increased before the reducing agent adsorption amount converges on the balanced adsorption amount, and a dot-dash line shows a case in which the temperature of the SCR catalyst 5 is increased before the reducing agent adsorption amount converges on the balanced adsorption amount. Further, dot-dot-dash lines show the estimated value of the reducing agent adsorption amount including an error. Control for correcting the estimated value of the reducing agent adsorption amount starts at a point indicated by T4. When the temperature of the SCR catalyst 5 is increased, the reducing agent adsorption amount converges at a point indicated by T5. When the temperature of the SCR catalyst 5 is not increased, the reducing agent adsorption amount converges at a point indicated by T6.

Hence, when the temperature of the SCR catalyst 5 is increased, the temperature of the SCR catalyst 5 takes longer to converge than when the temperature of the SCR catalyst 5 is not increased, but the reducing agent adsorption amount converges more quickly. As a result, the estimated value of the reducing agent adsorption amount can be corrected quickly. Furthermore, a frequency with which the estimated value of the reducing agent adsorption amount is corrected can be increased, and therefore increases in the error included in the estimated value of the reducing agent adsorption amount can be suppressed.

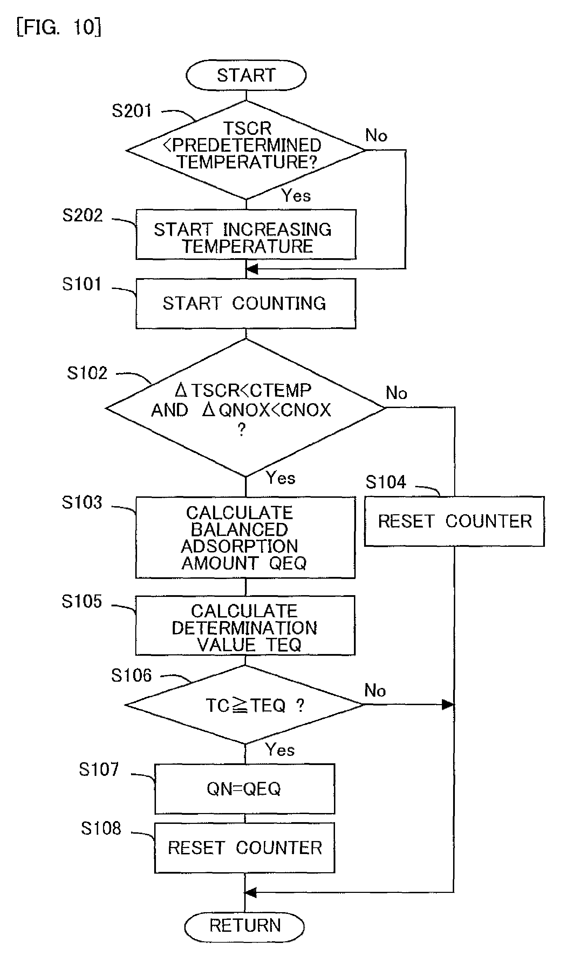

Fig. 10 is a flowchart showing a flow for correcting the estimated value of the reducing agent adsorption amount according to this embodiment. This routine is executed by the ECU 10 at preset time intervals. Note that steps in which identical processing to the flow described above is performed have been allocated identical step numbers, and description thereof has been omitted.

In step S201, a determination is made as to whether or not a temperature TSCR of the SCR catalyst 5 is lower than a predetermined temperature. The predetermined temperature is between 300°C and 400°C, for example, and serves as a lower limit value of a temperature range in which the estimated value of the reducing agent adsorption amount can be corrected quickly without increasing the temperature TSCR of the SCR catalyst 5. The predetermined temperature is set in consideration of the time required for the reducing agent adsorption amount to reach the balanced adsorption amount and the NOx purification ratio. Further, when the predetermined temperature is too high, it may take a long time to increase the temperature TSCR of the SCR catalyst 5, a fuel consumption may increase, and the reducing agent adsorption amount may become too small, and therefore an optimum value may be determined by experiments or the like taking these elements into consideration. When the determination of step S201 is affirmative, the routine advances to step S202, and when the determination is negative, the routine advances to step S101.

In step S202, the temperature TSCR of the SCR catalyst 5 is increased. The temperature of the SCR catalyst 5 is increased to a target between 300 and 400°C, for example. The temperature TSCR of the SCR catalyst 5 may be increased by discharging high-temperature gas from the internal combustion engine 1, for example. In this case, fuel may be injected into a cylinder a plurality of times, or a fuel injection timing into the cylinder may be retarded. Alternatively, an oxidation catalyst may be provided on the upstream side of the SCR catalyst 5, and the temperature of the exhaust gas may be increased by supplying fuel to the oxidation catalyst. Furthermore, a heater may be provided to heat the SCR catalyst 5. Note that in this embodiment, the ECU 10 that performs the processing of step S202 corresponds to a temperature increasing unit of the present invention. When the processing of step S202 is complete, the routine advances to step S101.

According to this embodiment, as described above, an error in the estimated value of the reducing agent adsorption amount can be removed more quickly while suppressing a reduction in the NOx purification ratio.

### [EXPLANATION OF REFERENCE NUMERALS AND CHARACTERS]

- 1: internal combustion engine
- 2: intake passage
- 3: exhaust passage
- 4: injection valve
- 5: selective reduction type NOx catalyst (SCR catalyst)
- 10: ECU
- 11: air flow meter
- 12: temperature sensor
- 13: first NOx sensor
- 14: second NOx sensor
- 15: accelerator operation amount sensor
- 16: crank position sensor

## Claims

1. An exhaust gas purification apparatus for an internal combustion engine, including:
a selective reduction type NOx catalyst that is provided in an exhaust passage of the internal combustion engine, and selectively reduces NOx when a reducing agent is supplied thereto; and
a supply unit that supplies the reducing agent to the selective reduction type NOx catalyst from an upstream side of the selective reduction type NOx catalyst,
the exhaust gas purification apparatus comprising:
an upper limit value calculation unit that calculates an upper limit value of a reducing agent amount that is adsorbed to the selective reduction type NOx catalyst when the reducing agent is supplied continuously by the supply unit during a steady state operation in the internal combustion engine; and
an estimation unit that estimates an upper limit value calculated by the upper limit value calculation unit when the reducing agent is supplied by the supply unit for at least a predetermined time during the steady state operation in the internal combustion engine to be the reducing agent amount adsorbed to the selective reduction type NOx catalyst at that time.

2. The exhaust gas purification apparatus for an internal combustion engine according to claim 1, wherein the estimation unit shortens the predetermined time steadily as a temperature of the selective reduction type NOx catalyst increases.

3. The exhaust gas purification apparatus for an internal combustion engine according to claim 1 or 2, wherein the estimation unit performs the estimation when a temperature of the selective reduction type NOx catalyst equals or exceeds a predetermined temperature.

4. The exhaust gas purification apparatus for an internal combustion engine according to claim 3, further comprising a temperature increasing unit that increases the temperature of the selective reduction type NOx catalyst to or above the predetermined temperature when the temperature of the selective reduction type NOx catalyst is lower than the predetermined temperature.

5. The exhaust gas purification apparatus for an internal combustion engine according to any one of claims 1 to 4, wherein during the estimation, the supply unit reduces an amount of the reducing agent supplied to the selective reduction type NOx catalyst below an amount of the reducing agent required to reduce all of the NOx flowing into the selective reduction type NOx catalyst.
